# EUROPEAN PATENT SPECIFICATION

(11) **EP 4 122 673 B1**
(45) Date of publication and mention of the grant of the patent: **21.02.2024**
(21) Application number: 21717952.2
(22) Date of filing: 16.03.2021
(51) Int. Cl.: B29C 48/11, B29C 48/12, B29C 48/13, H02G 3/00, F16B 7/18, H02G 3/04

(54) **SUPPORT BAR FOR CABLE TRAYS**
STÜTZSTANGE FÜR KABELRINNEN
BARRE DE SUPPORT POUR CHEMINS DE CÂBLES

(30) Priority: 18.03.2020 ES 202030499 U
(43) Date of publication of application: 25.01.2023
(73) Proprietor: Unex Aparellaje Electrico S.L., 08005 Barcelona (ES)
(72) Inventor: MOSTAZO OVIEDO, Jose Antonio, 08903 L'Hospitalet de Llobregat-Barcelona (ES)
(74) Representative: Curell Suñol S.L.P.
(86) International application number: PCT/ES2021/070189
(87) International publication number: WO 2021/186095

(56) References cited:
- EP-B1- 1 150 409
- ES-U- 1 220 465
- ES-U- 1 247 680
- FR-A1- 2 536 219
- US-A- 5 547 307

## Description

### Field of the Invention

The invention is comprised in the field of cable carrying devices which are used for guiding electric cables, fiber-optic cables, or cables of another type. The invention relates particularly to a support bar for cable trays, which is used for supporting a cable tray as well as for forming an assembly of support bars which are connected to one another to form a support structure for cable trays.

More specifically, the invention relates to a support bar for cable trays, of the type consisting of a hollow profile extruded from a polymer material in the form of a rail, having an outer perimeter with a rectangular cross-section, and comprising a base wall, two side walls facing one another, and an open wall, said open wall facing said base wall and comprising a continuous opening extending along the entire length of the support bar, such that said open wall has a flat outer surface extending on both sides of said continuous opening. The side walls form two facing flanges projecting towards the inside of the support bar, each of said flanges having a lower face oriented towards the base wall and an upper face, opposite said lower face, forming the flat outer surface of the open wall. The side walls further form two facing protrusions projecting towards the inside of the support bar below the lower face of the flanges, such that said protrusions do not cover said lower face of said flanges in a direction orthogonal to the base wall.

### State of the Art

A support bar structure which serves to support cable trays, as well as to directly fix some individual cables or small cable bundles to said support bars, is often built to install cables in a technical space, such as an industrial warehouse, for example. Support bars of the type described above provide great versatility for forming a support bar structure, particularly in terms of the fixing of connecting parts in order to connect two or more support bars to one another, as well as the fixing of cable trays of different types to the support bars forming the structure. To fix a cable tray, or a connecting part, or a support bracket for cable trays, to the support bar, a nut-like plate or another similar element, which is placed inside the support bar below the flanges and into which a locking screw is screwed, is used. The plate rests on the lower face of the flanges and is laterally confined by the two protrusions, such that it cannot rotate. In many installations, cable trays withstand a high weight, as a large number of cables and/or cables of a large diameter are run therethrough. To that end, the robustness of the fastenings is an important aspect when designing cable tray support structures.

A support bar in accordance with the preamble of claim 1 is disclosed in ES1220465U.

### Description of the Invention

The purpose of the invention is to provide a support bar for cable trays of the type indicated above, ensuring greater robustness for fixing a cable tray or other elements of a cable tray support structure thereto, without complicating the manufacture of said support bar or making it more expensive.

This purpose is achieved by means of a support bar for cable trays of the type indicated above, characterized in that it comprises two inner walls each of them joining the base wall and the protrusion of one of the side walls, each of said inner walls extending next to one of said side walls, such that the base wall, the side wall, and the inner wall together demarcate an empty space. The inner walls act like a buttress at the level of the protrusions, thereby preventing the side walls from bending due to the thrust force that the nut-like plate may exert on the protrusions, for example, when a cable tray which is fixed to the support bar is subjected to lateral stresses, or when a strong tightening is performed by means of screwing in the screw. This increased rigidity at the upper end of the side walls significantly improves fixing security. Furthermore, this configuration can be readily obtained in the extrusion process, with very little added material as a result of the empty space between the walls. Preferably, the separating distance between each of said protrusions and said lower face of said flanges, in a direction orthogonal to said base wall, is less than or equal to 5 mm.

In preferred embodiments, each of the inner walls comprises a lower segment extending from the base wall parallel to the side wall and an upper segment inclined with respect to said side wall and coming into a lower portion of the protrusion. As a result of this configuration, the inner walls scarcely reduce the inner width of the support bar, so they do not affect other fixing elements which can be introduced in the support bar.

Preferably, the flanges are formed by a hook-shaped upper portion of the side walls, and the lower face of the flange oriented towards the base wall is formed by a free end of said hook-shaped upper portion. This configuration allows the flanges to be readily formed by means of extrusion and reduces the amount of polymer material per linear meter of support bar. Furthermore, it allows the end of the flanges to deform slightly by bending, which facilitates the seating of the cable tray on the flat outer surface of the open wall of the support bar, as well as the seating of the nut-like plate on the lower face of the flanges, when the locking screw screwed into said plate is tightened.

Preferably, the lower face of each flange oriented towards the base wall comprises striation in the longitudinal direction of the support bar. This striation has the effect of increasing the frictional force between said lower face of the flanges and a nut-like plate which is placed inside the support bar and into which there is screwed a locking screw which is used for fixing a cable tray, a connecting part, or a support bracket to the support bar. As a result, when the installer places the nut-like plate, it slides along the support bar much less than in the prior art. The installer can therefore place the plate more readily without losing its position. By slightly tightening the locking screw, the plate is prevented from moving accidentally, but the installer may readily move it to adjust its position. Moreover, as a result of this striation being in the longitudinal direction of the support bar, said striation can be readily formed by extrusion together with the profile constituting the support bar.

Embodiments in which the striation on the lower face of the flange oriented towards the base wall is discontinuous are possible. However, said striation is preferably continuous and extends along the entire length of the support bar. This striation can be formed directly in the extrusion nozzle used to form the support bar, and allows the effect described above to be obtained in any position along said support bar.

Preferably, said striation on the lower face of the flange oriented towards the base wall is formed by a plurality of parallel ribs having a pointed shape in section at the end thereof opposite said lower face of the flange and extending in the longitudinal direction of said support bar. This configuration has the effect of increasing the frictional force, since the surface of the plate rests with greater pressure on the sharp edges formed by the pointed shape of the ribs. More preferably, these ribs have a triangular section. This shape provides the mentioned effect and is readily obtained by means of extrusion.

Preferably, the flat outer surface of the open wall comprises striation in the longitudinal direction of said support bar. The striation has the effect of significantly increasing the frictional force between the flat outer surface of the open wall of the support bar and the surface of the cable tray which is placed on said support bar. This same effect is also produced when a connecting part for connecting two support bars to one another is placed against said flat outer surface of the open wall of the support bar, or when a support bracket for supporting a cable tray is placed. As a result of this effect, when the installer places a cable tray on the support bar, for example, the cable tray slides on the support bar much less than in the prior art. The installer can thereby arrange all the fitting elements more readily without losing the correct position of the cable tray. By slightly tightening the locking screw, the cable tray is prevented from moving accidentally, but the installer can readily move it to adjust its position. The same advantage is obtained for fixing a connecting part or a support bracket to the support bar. Moreover, as a result of this striation being in the longitudinal direction of the support bar, said striation can be readily formed by extrusion together with the profile constituting the support bar. Another advantageous effect of this striation being in the longitudinal direction of the support bar is that it effectively reduces the sliding of cables, in the longitudinal direction of the cables, when said cables extend transverse to the support bar, resting on the flat outer surface of the open wall. When these cables are fixed with clamping means against said open wall, the anti-sliding effect provided by the striation allows the cables to be retained in the longitudinal direction thereof by clamping them to a lesser extent.

Embodiments in which the striation on the flat outer surface of the open wall is discontinuous are possible. However, said striation is preferably continuous and extends along the entire length of the support bar. Said striation is preferably formed by a plurality of parallel ribs having a pointed shape in section at the end thereof opposite the flat outer surface and extending in the longitudinal direction of the support bar. More preferably, said ribs of the striation have a triangular section. The advantages are similar to those described above for the striation on the lower face of the flanges.

In the preferred embodiments, the base wall comprises through holes uniformly distributed along the support bar and facing the continuous opening of the open wall. This configuration provides greater versatility for fixing elements to the support bar. In particular, it allows passing a locking screw through one of the through holes.

Preferably, the support bar is made of an electrically insulating polymer material, such as PVC (polyvinyl chloride), for example, with a surface resistivity exceeding 100 MΩ (surface resistivity measured according to the EN 62631-3-2:2016 standard).

The invention also comprises other detail features shown in the following detailed description of an embodiment of the invention and in the attached figures.

### Brief description of the Drawings

The advantages and features of the invention are apparent from the following description in which a preferred embodiment of the invention is described in a non-limiting manner with respect to the scope of the main claim in reference to the figures.
Figures 1 and 2 are a top front perspective view and a bottom front perspective view of the support bar, respectively.
Figure 3, 4, 5, and 6 are a front view, a top view, a side view, and a bottom view of the support bar, respectively.
Figure 7 is an enlarged view showing the upper portion of one of the side walls of the support bar.
Figures 8 to 13 show an assembly formed by the support bar and a cable tray fixed thereto by means of a screw and a nut-like plate.

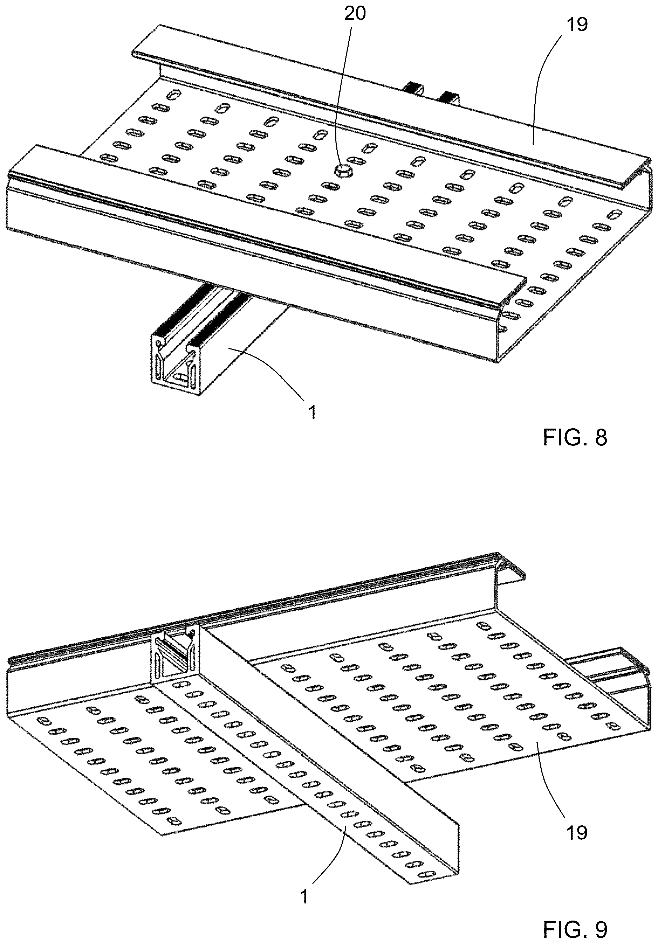

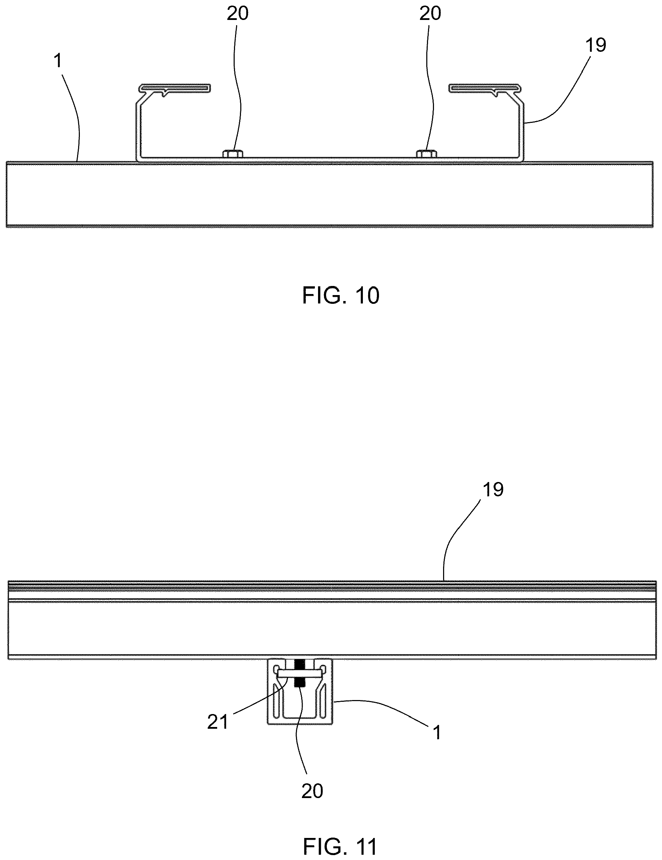

Figures 8, 9, 10, and 11 are a top perspective view, a bottom perspective view, a side view, and a front view of the assembly, respectively.

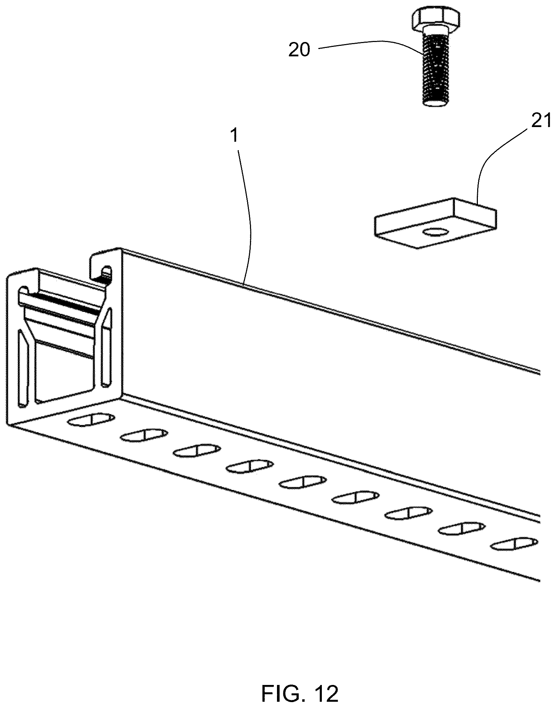

Figure 12 is an exploded perspective view showing the support bar, the locking screw, and the nut-like plate.

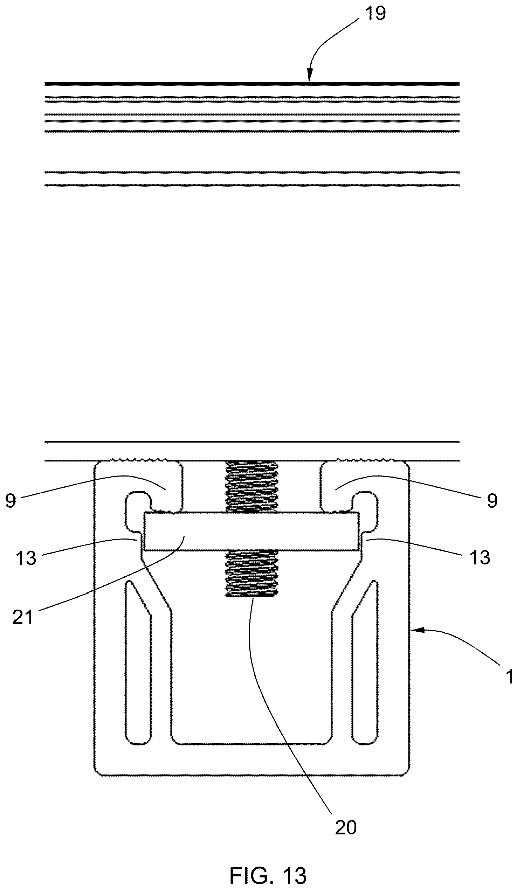

Figure 13 is an enlarged front view of the assembly, showing the position of the screw and the plate inside the support bar.

### Detailed Description of an Embodiment of the Invention

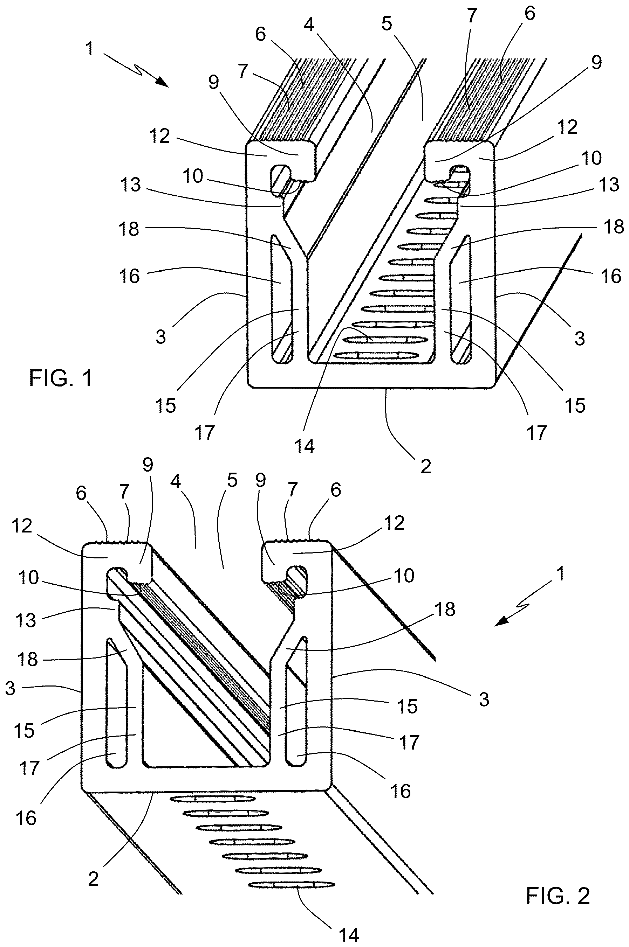

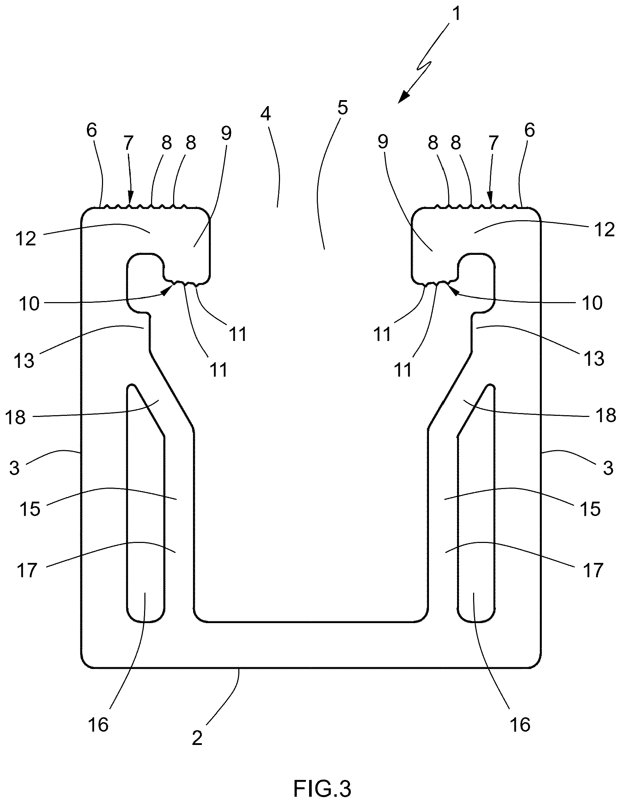

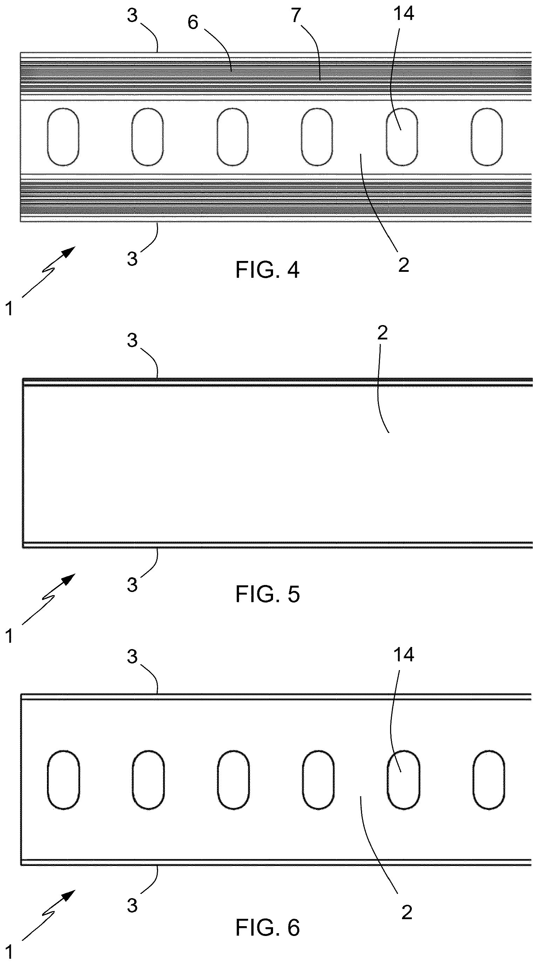

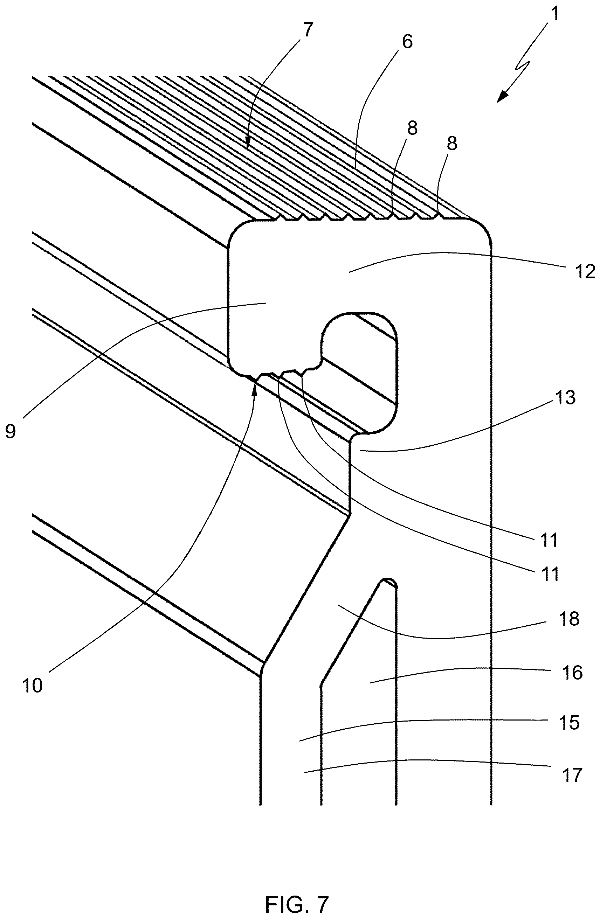

Figures 1 to 7 show a preferred embodiment of the support bar for cable trays according to the invention.

The support bar 1 is a hollow profile extruded from a polymer material, preferably an electrically insulating material, such as for example, a thermoplastic such as PVC or a thermosetting resin. As can be seen in Figures 1 to 3, the profile is in the form of a rail, with an outer perimeter with a rectangular cross-section, and comprises a base wall 2, two side walls 3 facing one another, and an open wall 4 facing the base wall 2. The open wall 4 comprises a continuous opening 5 extending along the entire length of the support bar 1, such that said open wall 4 has a flat outer surface 6 extending on both sides of said continuous opening 5. The side walls 3 form at their upper end two facing flanges 9 projecting towards the inside of the support bar 1. Each of the flanges 9 has a lower face oriented towards the base wall 2. The flanges 9 are formed by a hook-shaped upper portion 12 of the side walls. The lower face of the flange 9, oriented towards the base wall 2, is formed by a free end of said hook-shaped upper portion 12.

The flat outer surface 6 extending on both sides of the continuous opening 5 is formed by a flat upper face of the flanges 9, opposite the lower face of said flanges 9. This flat outer surface 6 comprises striation 7 in the longitudinal direction of the support bar 1 on both sides of the continuous opening 5. The striation 7 is continuous, extends in the longitudinal direction of the support bar 1 along the entire length thereof, and is formed by a plurality of parallel ribs 8 having a pointed shape in section at the end thereof opposite the flat outer surface 6. More specifically, in the embodiment depicted in the figures, there are eight identical ribs 8 with a triangular section. The striation 7 is formed directly at the nozzle of the extruder used to form the profile.

The lower face of the flanges 9, oriented towards the base wall 2 comprises striation 10 in the longitudinal direction of the support bar 1. The striation 10 is continuous, extends in the longitudinal direction of the support bar 1 along the entire length thereof, and is formed by a plurality of parallel ribs 11 having a pointed shape in section at the end thereof opposite the lower face of the flanges 9. More specifically, in the embodiment depicted in the figures, there are three identical ribs 11 with a triangular section. The striation 10 is also formed directly at the nozzle of the extruder used to form the profile.

The side walls 3 form two facing protrusions 13 projecting towards the inside of the support bar 1 below the lower face of the flanges 9, and such that said protrusions 13 do not cover said lower face of said flanges 9 in a direction orthogonal to said base wall 2. The protrusions 13 are formed directly at the nozzle of the extruder used to form the profile. As will be seen below, this configuration of the flanges 9 and the protrusions 13 allows a nut-like plate to rest on the lower face of the flanges 9 and be laterally confined by the two protrusions 13. Preferably, the protrusions 13 are continuous and extend along the entire length of the support bar 1. The separating distance between each of the two protrusions 13 and the lower face of the flanges 9, in a direction orthogonal to the base wall 2, is less than or equal to 5 mm. In the embodiment depicted in the figures, this separating distance is 3 mm. The outer perimeter of the support bar 1 is a 50 x 50 mm square.

The support bar 1 comprises two inner walls 15 each of them joining the base wall 2 and the protrusion 13. Each inner wall 15 extends next to the corresponding side wall 3, and comprises a lower segment 17 extending from the base wall 2, parallel to the side wall 3, and an upper segment 18 inclined with respect to said side wall 3 and coming into a lower portion of the corresponding protrusion 13. The base wall 2, the side wall 3, and the inner wall 15 together demarcate an empty space 16. The side walls 15 are preferably continuous and extend along the entire length of the support bar 1. They are formed directly at the nozzle of the extruder used to form the profile.

The base wall 2 comprises through holes 14 uniformly distributed along the support bar 1. The through holes 14 are elongated through holes in a transverse direction of the support bar 1, and are facing the continuous opening 5 of the open wall 4. In other embodiments, the through holes 14 may have different shapes. For example, they can be elongated holes in a longitudinal direction of the support bar 1.

Figures 8 to 13 show an assembly formed by the support bar 1 and a cable tray 19 fixed thereto. The flat lower face of the bottom wall of the cable tray 19 rests on the flat outer surface 6, comprising the striation 7, of the open wall 4 of the support bar 1. In the assembly shown in the figures, the cable tray 19 is fixed to the support bar 1 by means of a screw 20 and a plate 21 with a threaded hole acting as a nut. In the depicted embodiment, the plate 21 has a rectangular shape and a thickness of 6 mm. The screw 20 and the plate 21 can be made of metal, or preferably of a polymer material with high mechanical strength. As can be seen in greater detail in Figure 13, a main face of the plate 21 rests against the lower face of the flanges 9, comprising the striation 10, and is laterally confined between the protrusions 13 such that it cannot rotate. The screw 20 is screwed into the plate 21 and its head rests on the flat upper face of the bottom wall of the cable tray, thereby fixing the cable tray 19 against the support bar 1 by pressure. Striations 7 and 10 limit the sliding of the cable tray 19 and the plate 21, respectively, even when a strong tightening with the screw 20 has yet to be performed. The inner walls 15 act like a buttress and prevent the side walls 3 from bending as a result of the force the plate 21 exerts on the protrusions 13.

## Claims

1. A support bar (1) for cable trays, said support bar (1) being a hollow profile extruded from a polymer material in the form of a rail, having an outer perimeter with a rectangular cross-section, and comprising a base wall (2), two side walls (3) facing one another, and an open wall (4), said open wall (4) facing said base wall (2) and comprising a continuous opening (5) extending along the entire length of said support bar (1), such that said open wall (4) has a flat outer surface (6) extending on both sides of said continuous opening (5), said side walls (3) forming two facing flanges (9) projecting towards the inside of said support bar (1), each of said flanges (9) having a lower face oriented towards said base wall (2) and an upper face, opposite said lower face, forming said flat outer surface (6) of the open wall (4), and said side walls (3) forming two facing protrusions (13) projecting towards the inside of said support bar (1) below said lower face of said flanges (9), and such that said protrusions (13) do not cover said lower face of said flanges (9) in a direction orthogonal to said base wall (2), **characterized in that** it comprises two inner walls (15) each of them joining said base wall (2) and said protrusion (13) of one of said side walls (3), each of said inner walls (15) extending next to one of said side walls (3), such that said base wall (2), said side wall (3), and said inner wall (15) together demarcate an empty space (16).

2. The support bar (1) according to claim 1, **characterized in that** the separating distance between each of said protrusions (13) and said lower face of said flanges (9), in a direction orthogonal to said base wall (2), is less than or equal to 5 mm.

3. The support bar (1) according to any one of claims 1 or 2, **characterized in that** each of said inner walls (15) comprises a lower segment (17) extending from said base wall (2) parallel to said side wall (3) and an upper segment (18) inclined with respect to said side wall (3) and coming into a lower portion of said protrusion (13).

4. The support bar (1) according to any one of claims 1 to 3, **characterized in that** said flanges (9) are formed by a hook-shaped upper portion (12) of said side walls (3), and said lower face of the flange (9), oriented towards said base wall (2), is formed by a free end of said hook-shaped upper portion (12).

5. The support bar (1) according to any one of claims 1 to 3, **characterized in that** said lower face of each flange (9) oriented towards said base wall (2) comprises striation (10) in the longitudinal direction of said support bar (1).

6. The support bar (1) according to claim 5, **characterized in that** said striation (10) on the lower face of said flange (9) oriented towards the base wall (2) is continuous and extends along the entire length of said support bar (1).

7. The support bar (1) according to any one of claims 5 or 6, **characterized in that** said striation (10) on the lower face of said flange (9) oriented towards the base wall (2) is formed by a plurality of parallel ribs (11) having a pointed shape in section at the end thereof opposite said lower face of the flange (9) and extending in the longitudinal direction of said support bar (1).

8. The support bar (1) according to claim 7, **characterized in that** said ribs (11) of the striation (10) on the lower face of the flange (9) oriented towards the base wall (2) have a triangular section.

9. The support bar (1) according to any one of claims 1 to 8, **characterized in that** said flat outer surface (6) of the open wall (4) comprises striation (7) in the longitudinal direction of said support bar (1).

10. The support bar (1) according to claim 9, **characterized in that** said striation (7) on the flat outer surface (6) of the open wall (5) is continuous and extends along the entire length of said support bar (1).

11. The support bar (1) according to any one of claims 9 or 10, **characterized in that** said striation (7) on the flat outer surface (6) of the open wall (5) is formed by a plurality of parallel ribs (8) having a pointed shape in section at the end thereof opposite said flat outer surface (6) and extending in the longitudinal direction of said support bar (1).

12. The support bar (1) according to claim 11, **characterized in that** said ribs (8) of the striation (7) on the flat outer surface (6) of the open wall (5) have a triangular section.

13. The support bar (1) according to any one of claims 1 to 12, **characterized in that** said base wall (2) comprises through holes (14) uniformly distributed along said support bar (1) and facing said continuous opening (5) of the open wall (4).

## Patentansprüche

1. Stützstange (1) für Kabelrinnen, wobei die Stützstange (1) ein aus einem Polymermaterial extrudiertes Hohlprofil in Form einer Schiene ist, das einen Außenumfang mit rechteckigem Querschnitt aufweist, und eine Basiswand (2), zwei einander gegenüberliegende Seitenwände (3) und eine offene Wand (4) umfasst, wobei die offene Wand (4) der Basiswand (2) gegenübersteht und eine durchgehende Öffnung (5) aufweist, die sich entlang der gesamten Länge der Stützstange (1) erstreckt, so dass die offene Wand (4) eine flache Außenfläche (6) aufweist, die sich auf beiden Seiten der durchgehenden Öffnung (5) erstreckt,
wobei die Seitenwände (3) zwei gegenüberliegende Flansche (9) ausbilden, die in das Innere der Stützstange (1) vorstehen, wobei jeder der Flansche (9) eine Unterseite, die zur Basiswand (2) gerichtet ist, und eine obere Fläche aufweist, die der Unterseite gegenüberliegt und die flache Außenfläche (6) der offenen Wand (4) bildet, und wobei die Seitenwände (3) zwei einander zugewandte Vorsprünge (13) ausbilden, die unterhalb der Unterseite der Flansche (9) in das Innere der Stützstange (1) vorstehen, und sodass die Vorsprünge (13) die Unterseite der Flansche (9) in einer zur Basiswand (2) orthogonalen Richtung nicht abdecken, **dadurch gekennzeichnet, dass** sie zwei Innenwände (15) umfasst, die jeweils die Basiswand (2) und den Vorsprung (13) einer der Seitenwände (3) verbinden, wobei sich jede der Innenwände (15) neben einer der Seitenwände (3) erstreckt, so dass die Basiswand (2), die Seitenwand (3) und die Innenwand (15) zusammen einen leeren Raum (16) abgrenzen.

2. Stützstange (1) nach Anspruch 1, **dadurch gekennzeichnet, dass** der Trennungsabstand zwischen jedem der Vorsprünge (13) und der Unterseite der Flansche (9) in einer Richtung orthogonal zur Basiswand (2) kleiner oder gleich 5 mm ist.

3. Stützstange (1) nach einem der Ansprüche 1 oder 2, **dadurch gekennzeichnet, dass** jede der Innenwände (15) ein unteres Segment (17), das sich von der Basiswand (2) parallel zu der Seitenwand (3) erstreckt, und ein oberes Segment (18) aufweist, das in Bezug auf die Seitenwand (3) geneigt ist und in einen unteren Abschnitt des Vorsprungs (13) eintritt.

4. Stützstange (1) nach einem der Ansprüche 1 bis 3, **dadurch gekennzeichnet, dass** die Flansche (9) durch einen hakenförmigen oberen Abschnitt (12) der Seitenwände (3) ausgebildet werden und die Unterseite des Flansches (9), die zur Basiswand (2) hin gerichtet ist, durch ein freies Ende des hakenförmigen oberen Abschnitts (12) ausgebildet wird.

5. Stützstange (1) nach einem der Ansprüche 1 bis 3, **dadurch gekennzeichnet, dass** die Unterseite jedes Flansches (9), die zur Basiswand (2) hin gerichtet ist, eine Riffelung (10) in Längsrichtung der Stützstange (1) aufweist.

6. Stützstange (1) nach Anspruch 5, **dadurch gekennzeichnet, dass** die Riffelung (10) auf der Unterseite des Flansches (9), die zur Basiswand (2) hin gerichtet ist, durchgehend ist und sich über die gesamte Länge der Stützstange (1) erstreckt.

7. Stützstange (1) nach einem der Ansprüche 5 oder 6, **dadurch gekennzeichnet, dass** die Riffelung (10) auf der Unterseite des Flansches (9), die zur Basiswand (2) hin gerichtet ist, durch eine Vielzahl von parallelen Rippen (11) gebildet wird, die an dem Ende, das der Unterseite des Flansches (9) gegenüberliegt, im Schnitt eine spitze Form haben und sich in Längsrichtung der Stützstange (1) erstrecken.

8. Stützstange (1) nach Anspruch 7, **dadurch gekennzeichnet, dass** die Rippen (11) der Riffelung (10) auf der Unterseite des Flansches (9), die zur Basiswand (2) hin gerichtet ist, einen dreieckigen Querschnitt aufweisen.

9. Stützstange (1) nach einem der Ansprüche 5 bis 8, **dadurch gekennzeichnet, dass** die flache Außenfläche (6) der offenen Wand (4) eine Riffelung (7) in der Längsrichtung der Stützstange (1) aufweist.

10. Stützstange (1) nach Anspruch 9, **dadurch gekennzeichnet, dass** die Riffelung (7) auf der flachen Außenfläche (6) der offenen Wand (4) kontinuierlich ist und sich über die gesamte Länge der Stützstange (1) erstreckt.

11. Stützstange (1) nach einem der Ansprüche 9 oder 10, **dadurch gekennzeichnet, dass** die Riffelung (7) auf der flachen Außenfläche (6) der offenen Wand (4) durch eine Vielzahl von parallelen Rippen (8) ausgebildet wird, die an dem Ende, das der flachen Außenfläche gegenüberliegt, im Schnitt eine spitze Form haben und sich in Längsrichtung der Stützstange (1) erstrecken.

12. Stützstange (1) nach Anspruch 11, **dadurch gekennzeichnet, dass** die Rippen (8) der Riffelung (7) auf der ebenen Außenfläche (6) der offenen Wand (4) einen dreieckigen Querschnitt aufweisen.

13. Stützstange (1) nach einem der Ansprüche 1 bis 12, **dadurch gekennzeichnet, dass** die Basiswand (2) Durchgangslöcher (14) aufweist, die gleichmäßig entlang der Stützstange (1) verteilt sind und der durchgehenden Öffnung (5) der offenen Wand (4) gegenüberliegen.

## Revendications

1. Barre de support (1) pour chemins de câbles, ladite barre de support (1) étant un profilé creux extrudé dans un matériau polymère se présentant sous la forme d'un rail, ayant un périmètre externe avec une section transversale rectangulaire et comprenant une paroi de base (2), deux parois latérales (3) se faisant face, et une paroi ouverte (4), ladite paroi ouverte (4) faisant face à ladite paroi de base (2) et comprenant une ouverture continue (5) s'étendant le long de toute la longueur de ladite barre de support (1), de sorte que ladite paroi ouverte (4) a une surface extérieure plane (6) s'étendant des deux côtés de ladite ouverture continue (5), lesdits parois latérales (3) formant deux rebords opposés(9) faisant saillie vers l'intérieur de ladite barre de support (1), chacun desdits rebords (9) ayant une face inférieure orientée vers ladite paroi de base (2) et une face supérieure, opposée à ladite face inférieure, formant ladite surface extérieure plane (6) de la paroi ouverte (4), et lesdites parois latérales (3) formant deux saillies opposées (13) faisant saillie vers l'intérieur de ladite barre de support (1) au-dessous de ladite face inférieure desdits rebords (9) et de sorte que lesdites saillies (13) ne recouvrent pas ladite face inférieure desdits rebords (9) dans une direction orthogonale à ladite paroi de base (2), **caractérisée en ce qu'**elle comprend deux parois intérieures (15), chacune d'entre elles assemblant ladite paroi de base (2) et ladite saillie (13) de l'une desdites parois latérales (3), chacune desdites parois intérieures (15) s'étendant à côté de l'une desdites parois latérales (3), de sorte que ladite paroi de base (2), ladite paroi latérale (3) et ladite paroi intérieure (15) délimitent ensemble un espace vide (16).

2. Barre de support (1) selon la revendication 1, **caractérisée en ce que** la distance de séparation entre chacune desdites saillies (13) et ladite face inférieure desdits rebords (9), dans une direction orthogonale à ladite paroi de base (2), est inférieure ou égale à 5 mm.

3. Barre de support (1) selon l'une quelconque des revendications 1 ou 2, **caractérisée en ce que** chacune desdites parois intérieures (15) comprend un segment inférieur (17) s'étendant à partir de ladite paroi de base (2) parallèle à ladite paroi latérale (3) et un segment supérieur (18) incliné par rapport à ladite paroi latérale (3) et venant dans une partie inférieure de ladite saillie (13).

4. Barre de support (1) selon l'une quelconque des revendications 1 à 3, **caractérisée en ce que** lesdits rebords (9) sont formés par une partie supérieure en forme de crochet (12) desdites parois latérales (3), et ladite face inférieure du rebord (9), orientée vers ladite paroi de base (2), est formée par une extrémité libre de ladite partie supérieure en forme de crochet (12) .

5. Barre de support (1) selon l'une quelconque des revendications 1 à 3, **caractérisée en ce que** ladite face inférieure de chaque rebord (9) orientée vers ladite paroi de base (2) comprend des stries (10) dans la direction longitudinale de ladite barre de support (1).

6. Barre de support (1) selon la revendication 5, **caractérisée en ce que** lesdites stries (10) sur la face inférieure dudit rebord (9) orientée vers la paroi de base (2) sont continues et s'étendent le long de toute la longueur de ladite barre de support (1).

7. Barre de support (1) selon l'une quelconque des revendications 5 ou 6, **caractérisée en ce que** lesdites stries (10) sur la face inférieure dudit rebord (9) orientée vers la paroi de base (2) sont formées par une pluralité de nervures (11) parallèles ayant une forme pointue en section à leur extrémité opposée à ladite face inférieure du rebord (9) et s'étendant dans la direction longitudinale de ladite barre de support (1).

8. Barre de support (1) selon la revendication 7, **caractérisée en ce que** lesdites nervures (11) des stries (10) sur la face inférieure du rebord (9) orientée vers la paroi de base (2) ont une section triangulaire.

9. Barre de support (1) selon l'une quelconque des revendications 1 à 8, **caractérisée en ce que** ladite surface extérieure plane (6) de la paroi ouverte (4) comprend des stries (7) dans la direction longitudinale de ladite barre de support (1).

10. Barre de support (1) selon la revendication 9, **caractérisée en ce que** lesdites stries (7) sur la surface extérieure plane (6) de la paroi ouverte (5) sont continues et s'étendent le long de toute la longueur de ladite barre de support (1).

11. Barre de support (1) selon l'une quelconque des revendications 9 ou 10, **caractérisée en ce que** lesdites stries (7) sur la surface extérieure plane (6) de la paroi ouverte (5) sont formées par une pluralité de nervures (8) parallèles ayant une forme pointue en section à leur extrémité opposée à ladite surface extérieure plane (6) et s'étendant dans la direction longitudinale de ladite barre de support (1).

12. Barre de support (1) selon la revendication 11, **caractérisée en ce que** lesdites nervures (8) des stries (7) sur la surface extérieure plane (6) de la paroi ouverte (5) ont une section triangulaire.

13. Barre de support (1) selon l'une quelconque des revendications 1 à 12, **caractérisée en ce que** ladite paroi de base (2) comprend des trous passants (14) uniformément répartis le long de ladite barre de support (1) et faisant face à ladite ouverture continue (5) de la paroi ouverte (4).
